(19) Europäisches Patentamt
European Patent Office
Office européen des brevets

(11) **EP 1 355 791 B1**

(12) **FASCICULE DE BREVET EUROPEEN**

(45) Date de publication et mention
de la délivrance du brevet:
**23.07.2008 Bulletin 2008/30**

(21) Numéro de dépôt: **02712828.9**

(22) Date de dépôt: **21.01.2002**

(51) Int Cl.:
***B60B 21/10*** *(2006.01)*        ***B21D 53/30*** *(2006.01)*

(86) Numéro de dépôt international:
**PCT/EP2002/000545**

(87) Numéro de publication internationale:
**WO 2002/058946 (01.08.2002 Gazette 2002/31)**

(54) **JANTE DE ROUE EN TOLE D'ACIER A PROFIL OPTIMISE**

RADFELGE AUS STAHLBLECH MIT OPTIMIERTEM PROFIL

STEEL PLATE WHEEL RIM WITH OPTIMISED PROFILE

(84) Etats contractants désignés:
**AT BE CH CY DE DK ES FI FR GB GR IE IT LI LU MC NL PT SE TR**

(30) Priorité: **23.01.2001 FR 0100968**

(43) Date de publication de la demande:
**29.10.2003 Bulletin 2003/44**

(73) Titulaire: **MEFRO ROUES FRANCE**
**10600 La Chapelle St. Luc (FR)**

(72) Inventeurs:
• **GUIMARD, Bruno**
**F-63400 Chamalieres (FR)**

• **ALFF, Denis**
**F-63200 Riom (FR)**

(74) Mandataire: **de la Bigne, Guillaume Michel Marie et al**
**Lhermet La Bigne & Rémy**
**11, boulevard de Sébastopol**
**75001 Paris (FR)**

(56) Documents cités:
**EP-A- 0 780 244            DE-A- 19 721 860**
**US-A- 5 579 578**

**Description**

L'invention concerne les roues en tôle d'acier comportant un disque et une jante avec une gorge de montage et assemblés sous cette gorge de montage. Elle concerne particulièrement le profil de la section des jantes de ces roues.

Les roues des véhicules sont soumises en fonctionnement à des sollicitations répétées. Ces sollicitations peuvent entraîner des déchéances par fatigue. Pour mesurer la tenue en fatigue des roues, on soumet celles-ci à des tests d'endurance sur véhicules ou sur machines. Les machines de tests reproduisent de façon simplifiée et en accéléré les sollicitations des roues en usage réel. Les sollicitations des roues dépendent principalement de la charge du véhicule auquel sont destinées les roues.

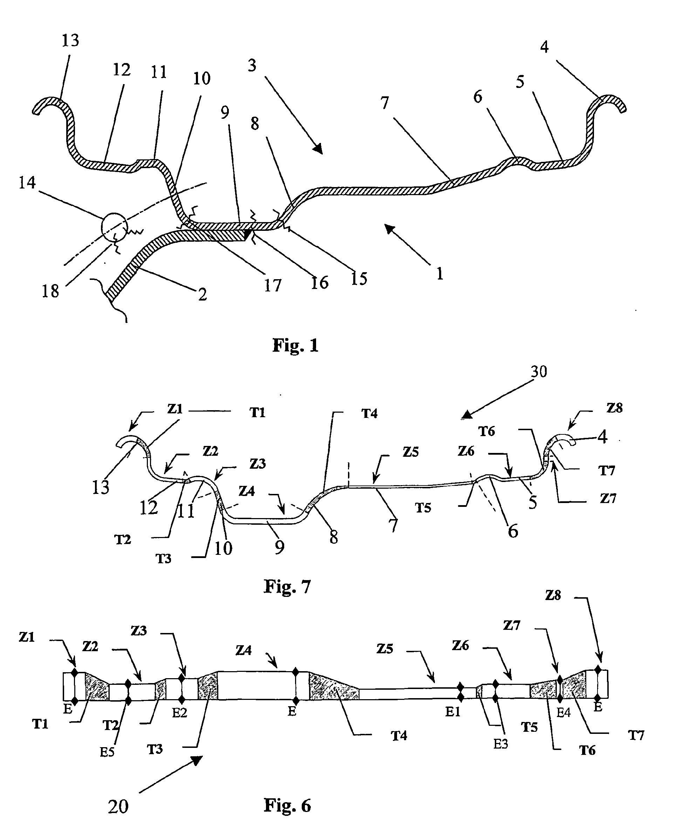

Les jantes des roues en tôle d'acier standards sont réalisées par une série d'opérations de mise en forme d'une virole d'épaisseur constante. Ces jantes ont ainsi une épaisseur sensiblement constante. Les zones de déchéances en fatigue de ces roues se trouvent usuellement au niveau des rayons de fond de gorge, au niveau de la soudure d'assemblage et au niveau du trou de valve (voir figure 1).

L'épaisseur des flans de départ en tôle destinés à la fabrication de ces jantes est ainsi fonction des sollicitations que les roues doivent subir en fonctionnement.

Le brevet US 5 579 578 présente une méthode de fabrication d'une jante de roue comportant une ou plusieurs opérations de fluotournage cylindrique inverse pour obtenir un profil de jante d'épaisseur variable et ainsi pouvoir diminuer le poids de la jante. Ce brevet ne donne aucune information sur les profils des sections des jantes à obtenir. Ce document forme l'état de la technique le plus proche sur lequel le préambule de la revendication 1 est fondé.

L'invention a pour objet la définition de la section d'une jante optimisée pour avoir un allègement élevé tout en conservant une résistance à la fatigue acceptable.

Selon un premier aspect, l'invention a pour objet une jante de roue pour véhicule automobile, en tôle d'acier, qui comporte axialement du côté intérieur au côté extérieur un crochet intérieur, un siège intérieur, une zone de liaison, une gorge de montage, un bossage de sécurité, un siège extérieur et un crochet extérieur, cette jante étant destinée à être assemblée à un disque de roue sous la gorge de montage. Cette jante est caractérisée en ce que, la jante ayant une épaisseur donnée E au niveau de la gorge de montage, la zone de liaison comporte une zone d'épaisseur E1 telle que :

$$E/3 + 0{,}5 \text{ mm} \geq E1 \geq E/3 \text{ mm} ;$$

et

$$E1 \geq 0{,}7 \text{ mm}.$$

L'ensemble de la zone sensiblement cylindrique et/ou tronconique de la zone de liaison peut avoir une épaisseur E1.

Ces relations montrent que l'épaisseur de la jante, sur tout ou partie de la zone de liaison, peut être réduite jusqu'à sensiblement le tiers de l'épaisseur au niveau de la gorge de montage. Cette très forte réduction d'épaisseur procure un allègement très sensible de la jante, même si une jante ainsi optimisée a une épaisseur au niveau de la gorge de montage supérieure à celle d'une jante comparable mono épaisseur.

Avantageusement, l'épaisseur E2 au niveau du bossage de sécurité adjacent au siège extérieur comporte une zone telle que :

$$E2 \geq E - 0{,}6 \text{ mm} ;$$

et

$$E2 \geq 1{,}4 \text{ mm}.$$

L'ensemble du bossage de sécurité peut avoir cette épaisseur E2.

On constate que l'épaisseur de cette zone du bossage de sécurité, adjacente extérieurement au flanc de la gorge de montage dans lequel passe le trou de valve n'a que peu d'incidence sur l'amplitude des sollicitations de la zone de la gorge de montage. En revanche, la proximité de la zone du trou de valve impose un défaut de parallélisme limité dans cette zone pour garder une bonne étanchéité de la valve après son montage. L'épaisseur minimale doit être de l'ordre de 1,4 mm.

Avantageusement, la jante de roue selon l'invention a une épaisseur E3 au niveau du siège intérieur qui comporte une zone satisfaisant aux relations suivantes :

$$E3 \geq E/3 + 0{,}45 \text{ mm} ;$$

et

$$E3 \geq 1{,}2 \text{ mm}.$$

La zone d'épaisseur E3 peut s'étendre sur l'ensemble du siège intérieur, y compris, le cas échéant, au bossage de sécurité adjacent à ce siège.

Ces relations indiquent que l'épaisseur dans cette zone peut aussi être très substantiellement réduite, de 40 à 50 % relativement à l'épaisseur dans la zone de la gorge de montage. Il convient cependant de ne pas diminuer cette épaisseur en deçà de 1,2 mm, pour ne pas risquer que, par exemple des agressions, telles celles liées aux crochets des pinces de serrage des roues des machines de montage ne puissent entraîner des endommagements dommageables en fatigue.

De préférence, on a : E3 ≤ E/3 + 0,9 mm. Cela contribue à l'allègement de la jante.

Avantageusement, l'épaisseur de la jante de roue, au niveau du crochet intérieur comporte une zone dont l'épaisseur E4 satisfait la relation suivante :

$$E4 \geq E/3 + 0{,}75 \text{ mm}$$

Et de préférence,

$$E4 \leq E/3 + 1{,}2 \text{ mm}$$

La zone d'épaisseur E4 peut comporter la zone du crochet d'orientation perpendiculaire à l'axe de rotation de la roue.

La réduction d'épaisseur dans cette zone peut ainsi atteindre de l'ordre de 40 à 27 % en fonction de l'épaisseur de la zone de la gorge de montage. Il est important de respecter les limites inférieures telles que précisées pour ne pas dégrader la tenue lors des tests de fatigue de la gorge de montage de la roue. En effet, l'épaisseur dans cette zone conditionne la rigidité du crochet de la jante.

Enfin, le siège extérieur de la roue peut comporter une zone dont l'épaisseur E5 satisfait à la relation suivante :

$$E5 \geq E/3 + 0{,}5 \text{ mm}$$

De préférence, dans un but d'allègement de la jante, on a aussi :

$$E5 \leq E/3 + 0{,}9 \text{ mm}$$

Cette zone d'épaisseur E5 peut s'étendre sensiblement à l'ensemble du siège extérieur.

De préférence, l'épaisseur E au niveau de la gorge de montage est comprise entre 1,9 et 2,75 mm. Ces épaisseurs sont usuellement utilisées pour les jantes de roues en tôle d'acier des véhicules de tourisme.

Un mode de réalisation particulier de l'invention est maintenant décrit, à titre non limitatif, à l'aide du dessin annexé dans lequel :

- la figure 1 est une vue schématique d'une roue mono épaisseur indiquant les zones de rupture possibles en fatigue ;
- la figure 2 présente les différentes étapes du procédé de réalisation d'une jante selon l'invention ;
- les figures 3, 4 et 5 illustrent schématiquement différentes étapes du procédé de réalisation présenté à la figure 2 ;
- la figure 6 est une vue en coupe méridienne d'une virole de jante selon l'invention à l'issue d'un ensemble d'opérations de fluotournage ;
- la figure 7 est une vue en coupe méridienne de la jante correspondant à la virole de la figure 6, après les opérations de profilage par roulage ;
- la figure 8 est une vue en coupe méridienne d'un second mode de réalisation d'une virole de jante selon l'invention à l'issue d'un ensemble d'opérations de fluotournage ; et
- la figure 9 est une vue en coupe méridienne de la jante correspondant à la virole de la figure 8, après les opérations de profilage par roulage.

A la figure 1 est présentée une coupe partielle d'une roue usuelle en tôle d'acier. Cette roue 1 comprend un disque 2 et une jante 3.

La jante 3 est une jante réalisée par un ensemble d'opérations de roulage d'une virole d'épaisseur constante. Cette jante a sensiblement une épaisseur constante. Cette jante 3 présente un crochet intérieur 4, un siège intérieur 5, un bossage de sécurité ou " hump " intérieur 6, une zone de transition 7, une gorge de montage 9 avec un flanc intérieur 8 et un flanc extérieur 10, un bossage de sécurité extérieur 11, un siège extérieur 12 et un crochet extérieur 13. Le disque 2 est assemblé à la jante 3 par emboîtage sous la gorge de montage 9. Cette figure illustre aussi, avec un rabattement partiel, le trou de valve 14 qui traverse le flanc 10 extérieur de la gorge de montage 9.

Dans ce qui suit, on utilisera les mêmes références pour les parties similaires des jantes de roues selon l'invention.

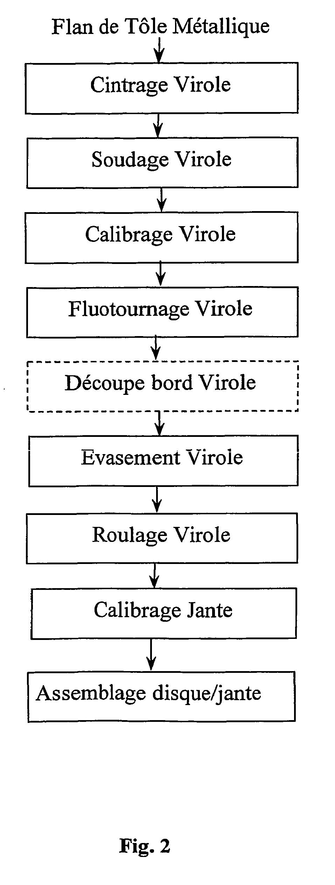

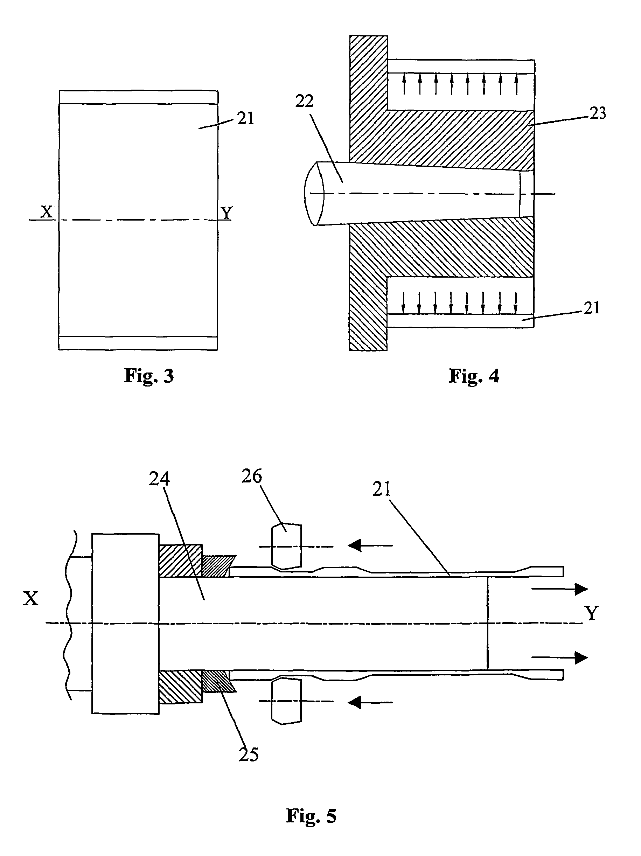

Un procédé de réalisation des jantes des roues selon l'invention est illustré à la figure 2. Initialement, un flan de tôle métallique (non représenté) d'acier, d'aluminium ou d'alliages, est cintré pour lui donner une forme généralement cylindrique de virole 21 avec deux bords libres. Ensuite, la virole 21 est soudée par un procédé de soudure par étincelage, par résistance ou autre. Cette virole 21 a une épaisseur constante (figure 3). La virole 21 est ensuite, de préférence, calibrée en extension à l'aide d'un outil de calibrage schématisé à la figure 4. L'expansion est obtenue par le déplacement d'une came 22 qui écarte des secteurs 23 autour desquels est installée la virole 21. La figure 5 illustre l'étape suivante qui consiste à obtenir par fluotournage cylindrique le profil à plat recherché pour les jantes selon l'invention. Le procédé de fluotournage utilisé est le fluotournage inverse. La virole 21 est montée sur un mandrin 24 et vient en appui contre une paroi du système 25 de blocage de la virole 21. Le mandrin 24 est alors mis en rotation et au moins deux molettes 26 viennent rouler sur la surface radialement extérieure de la virole 21 dans les zones dont l'épaisseur doit être diminuée. Relativement au mandrin 24, les molettes 26 sont déplacées axialement dans la direction de l'axe X en appliquant un effort radial et tangentiel de telle sorte que le flux de matière flue en direction de Y. Ce fluage de matière s'effectue en sens inverse du déplacement des molettes 26. La figure 5 illustre schématiquement un exemple de profil de la virole 21 obtenu. Ce profil comprend cinq zones d'épaisseurs constantes et trois zones d'épaisseurs variables de transition.

Il est à noter que ce procédé de fluotournage inverse ne permet pas de réduire l'épaisseur de l'intégralité de la virole. En effet, on laisse de chaque côté de la virole une zone non fluotournée : du côté d'attaque des molettes, cela risquerait de déstabiliser la virole et d'endommager les molettes ; du côté du dispositif de fixation de la virole faisant butée, on laisse une zone pour que ce dispositif puisse pincer le bord de la virole et l'entraîner en rotation lors de l'opération de fluotournage.

Après avoir achevé les opérations de fluotournage, on peut découper, si nécessaire, l'un ou les deux bords de la virole, puis on évase la virole, on effectue des opérations de roulage de la virole pour obtenir le profil de jante recherché (voir fig. 7), on calibre la jante et on réalise l'emboîtage avec des disques appropriés.

A la figure 1 sont aussi schématiquement indiquées les zones possibles de déchéances en fatigue de la jante 3 de la roue 1. Ces zones sont les suivantes : la zone 15 située dans le flanc intérieur 8 de la gorge de montage 9 ou à la liaison entre ce flanc et la gorge ; la zone 16 située sous la gorge de montage, à proximité du cordon de soudure disque-jante ; la zone 17 située à la liaison entre la gorge de montage 9 et le flanc extérieur 10 de cette gorge ; et les zones 18 en bordure du trou de valve 14. Dans toutes ces zones, on peut voir apparaître des fissures.

La figure 6 illustre un exemple de virole obtenue par un procédé de fluotournage correspondant aux profils des sections selon l'invention.

Cette virole 20 présente 8 zones d'épaisseurs constantes séparées par 7 zones d'épaisseurs variables.

Les figures 6 et 7 permettent de relier les différentes zones d'épaisseurs constantes et variables à la géométrie de la jante 30 en résultant. Il est à noter que la figure 6 a une échelle dilatée dans la direction perpendiculaire à la direction axiale relativement à la direction axiale.

Les deux zones Z1 et Z8, d'épaisseurs constantes égale à l'épaisseur E du flanc de tôle d'acier de départ correspondent aux deux extrémités axiales des rebords des crochets 13 et 4.

La zone Z2 d'épaisseur constante E5 correspond au siège extérieur 12. Entre les zones Z1 et Z2 se trouve la zone T1, d'épaisseur variable dont l'épaisseur varie de E à E5 en allant du rebord du crochet à la partie verticale de celui-ci.

On trouve ensuite une zone de transition T2 entre les zones Z2 et Z3. La zone Z3 correspond sensiblement au bossage de sécurité extérieur 11. La zone de transition T2 est une liaison entre le siège extérieur 12 et le bossage 11. Cette zone a un faible rayon de courbure.

La zone Z4 correspond à la gorge de montage prolongée de part et d'autre des zones des flancs intérieur et extérieur à faibles rayons de courbure. Cette zone Z4 a une épaisseur E correspondant à celle du flanc de départ. Il est à noter que cette zone inclus les zones de déchéances 15, 16 et 17 précisées à la figure 1. Entre Z4 et Z3, se trouve la zone de transition T3 qui correspond sensiblement au flanc extérieur 10, cette zone inclus aussi le trou de valve 14 et les zones de déchéances 18.

La zone Z5 correspond à la zone de liaison 7. La zone de transition T4 se trouve entre Z4 et Z5. Cette zone de transition correspond sensiblement au flanc intérieur 8 de la gorge de montage.

On a ensuite la zone Z6 correspondant sensiblement au siège intérieur 5 et au bossage de sécurité intérieur 6. La zone de transition T5 est entre Z5 et Z6.

La zone Z7 se trouve placée sensiblement dans la partie verticale (ou perpendiculaire à l'axe de rotation de la jante) du crochet intérieur 4. Cette zone est adjacente intérieurement à T6 et extérieurement à T7. T6 correspond à l'extrémité axialement intérieure du siège intérieur 5 jusqu'à la partie verticale du crochet 4. T7 correspond à la première partie du rebord du crochet intérieur 4. Enfin, on a la zone Z8 d'épaisseur constante correspondant au bord intérieur du rebord du crochet 4.

Le tableau suivant présente les épaisseurs relatives des différentes zones Z1 à Z8 dans l'exemple des figures 6 et 7, en prenant comme référence à 100 l'épaisseur E initiale du flanc de départ, ainsi que les intervalles de valeurs préconisées en prenant comme référence les épaisseurs du flanc de départ comprises entre 1,9 et 2,75 mm.

| Zone | Z1 | Z2 | Z3 | Z4 | Z5 | Z6 | Z7 | Z8 |
|---|---|---|---|---|---|---|---|---|
| Epaisseur relative | 100 | 64 | 80 | 100 | 50 | 73 | 82 | 100 |
| Intervalle mini-maxi | | 50-80 | 70-100 | | 33-60 | 48-80 | 60-97 | |

Ce tableau indique que les jantes de roues à épaisseur variable selon l'invention présente une zone principale de réduction d'épaisseur et de poids, la zone Z5 correspondant à la zone de liaison 7. La réduction d'épaisseur peut atteindre 66 % relativement à l'épaisseur du flanc métallique de départ.

La seconde zone est Z6, là la réduction d'épaisseur peut atteindre 50 %. Il est cependant nécessaire de conserver une épaisseur supérieure à 1,2 mm pour éviter que, par exemple des agressions, telles celles liées aux crochets des pinces de serrage des roues des machines de montage ne puissent entraîner des endommagements dommageables en fatigue.

Dans le cas d'une roue de dimensions 6,5 J 15 H2, pour un cahier des charges donné, une jante usuelle a une épaisseur de l'ordre de 2,0 mm alors que l'épaisseur E pour une jante selon l'invention peut être de 2,2 mm. Pour de telles roues, le gain de poids obtenu pour une jante selon l'invention peut atteindre 0,7 kg, soit de l'ordre de 15 à 20 %.

Il est à noter que la réduction d'épaisseur et en conséquence le gain de poids, peuvent dans de nombreux cas être relativement supérieurs lorsque l'épaisseur du flan de départ augmente ainsi que lorsque le diamètre de la roue augmente.

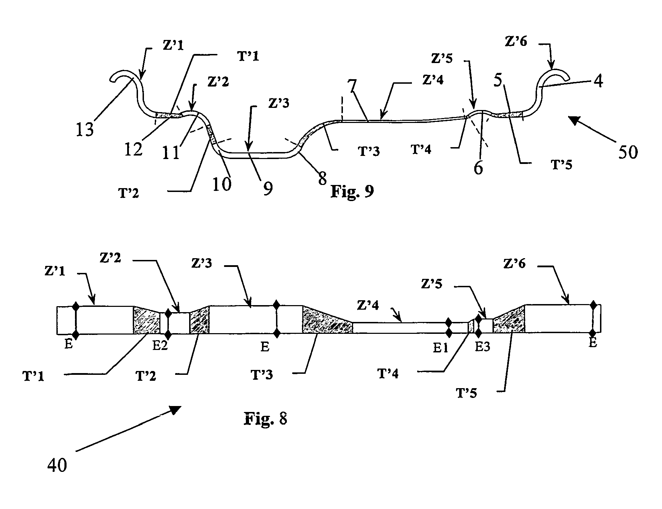

La figure 8 illustre un second exemple de virole obtenue par un procédé de fluotournage correspondant aux profils des sections selon l'invention.

Cette virole 40 présente 6 zones d'épaisseurs constantes séparées par 5 zones d'épaisseurs variables.

Comme précédemment, les figures 8 et 9 permettent de relier les différentes zones d'épaisseurs constantes et variables à la géométrie de la jante 50 en résultant.

Les deux zones Z'1 et Z'6 correspondent aux deux extrémités axiales de la virole, ces deux zones ont l'épaisseur E du flanc de tôle de départ. Elles correspondent ici à l'intégralité des crochets intérieur 4 et extérieur 13 jusqu'aux extrémités des sièges intérieur 5 et extérieur 12.

La zone Z'2 d'épaisseur constante E2 correspond sensiblement au bossage de sécurité extérieur 11. Entre les zones Z'1 et Z'2 se trouve la zone de transition T'1 qui correspond au siège extérieur 12.

Les zones Z'3 et Z'4 correspond respectivement à la gorge de montage 9 augmentée des zones à faible rayon de courbure des flancs 9 et 8 de la gorge et à la zone de liaison 7. L'épaisseur de la zone Z'3 est E, celle de la zone Z'4 est E1.

Entre Z'2 et Z'3 se trouve la zone de transition T'2 qui correspond sensiblement à la zone du trou de valve du flanc 10. Entre Z'3 et Z'4 se trouve la zone de transition T'3 qui correspond sensiblement à la zone de faible rayon de courbure comprenant l'extrémité axialement extérieure de la zone de liaison 7 et l'extrémité axialement intérieure du flanc intérieur 8 de la gorge de montage 9.

La zone Z'5 correspond sensiblement au bossage intérieur 6. Son épaisseur est E3. Entre Z'4 et Z'5 se trouve la zone de transition T'4, de faible longueur.

Enfin entre la zone Z'6 et la zone Z'5 se trouve la zone de transition T'5 qui correspond sensiblement au siège intérieur 5.

L'exemple des figures 8 et 9 est un exemple simplifié de profil de jante selon l'invention dans lequel, en fait, le profil compris entre l'extrémité axialement extérieure du siège intérieur 6 et l'extrémité axialement intérieure du siège extérieur 12 est identique à celui de la jante 30. La simplification provient du profil à épaisseur constante des deux crochets intérieur et extérieur ce qui les rigidifie. En conséquence on peut rapprocher l'épaisseur du flan de départ de cette jante de celle d'une jante standard d'épaisseur constante. Ce profil permet ainsi d'obtenir un allègement sensiblement identique du poids de la jante.

L'exemple des figures 6 à 9 n'est à considérer que comme des exemples non limitatifs de la portée de l'invention. On peut en effet faciliter notablement la réalisation du profil à plat de la virole par fluotournage en définissant un profil avec moins de zones d'épaisseurs différentes, 4 ou 5 par exemple.

## Revendications

1. Jante (30, 50) de roue pour véhicule automobile, en tôle d'acier, comportant axialement du côté intérieur au côté extérieur un crochet intérieur (4), un siège intérieur (5), une zone de liaison (7), une gorge de montage (9), un bossage de sécurité (11), un siège extérieur (5) et un crochet extérieur (13), ladite jante étant destinée à être assemblée à un disque (2) de roue sous la gorge de montage (9), **caractérisée en ce que**, ladite jante ayant une épaisseur donnée E au niveau de ladite gorge de montage (9), la zone de liaison (7) comporte une zone (Z5, Z'4) d'épaisseur E1 telle que :

$$E/3 + 0{,}5 \text{ mm} \geq E1 \geq E/3 \text{ mm} \ ;$$

et

$$E1 \geq 0{,}7 \text{ mm}.$$

2. Jante (30, 50) selon la revendication 1, dans laquelle l'ensemble de la zone de liaison (7) a une épaisseur E1.

3. Jante (30, 50) de roue selon l'une des revendications 1 et 2, dans laquelle l'épaisseur E2 au niveau du bossage de sécurité extérieur (11) comporte une zone (Z3, Z'2) satisfaisant aux relations suivantes :

$$E2 \geq E - 0{,}6 \text{ mm} \ ;$$

et

$$E2 \geq 1{,}4 \text{ mm}.$$

4. Jante (30, 50) de roue selon la revendication 3, dans laquelle la zone (Z3, Z'2) d'épaisseur E2 s'étend sensiblement sur l'ensemble du bossage de sécurité extérieur (11).

5. Jante (30) de roue selon l'une des revendications 1 à 4, dans laquelle l'épaisseur E3 au niveau du siège intérieur (5) comporte une zone (Z6) satisfaisant aux relations suivantes :

$$E3 \geq E/3 + 0,45 \text{ mm} \; ;$$

et

$$E3 \geq 1,2 \text{ mm}.$$

**6.** Jante (30) de roue selon la revendication 5, dans laquelle :

$$E3 \leq E/3 + 0,9 \text{ mm}.$$

**7.** Jante (30) de roue selon l'une des revendications 5 et 6, dans laquelle l'ensemble du siège intérieur (5) a une épaisseur E3.

**8.** Jante (30) de roue selon la revendication 7, dans laquelle, la jante comportant un bossage de sécurité intérieur (6), la zone (Z6) d'épaisseur E3 comprend l'ensemble de ce bossage.

**9.** Jante (30) de roue selon l'une des revendications 1 à 8, dans laquelle l'épaisseur au niveau du crochet intérieur (4) comporte une zone (Z7) dont l'épaisseur E4 satisfait la relation suivante :

$$E4 \geq E/3 + 0,75 \text{ mm}$$

**10.** Jante (30) de roue selon la revendication 9, dans laquelle :

$$E4 \leq E/3 + 1,2 \text{ mm}$$

**11.** Jante (30) de roue selon l'une des revendications 8 et 9, dans laquelle la zone (Z7) du crochet d'épaisseur E4 comporte la zone du crochet d'orientation perpendiculaire à l'axe de rotation de la roue.

**12.** Jante (30) de roue selon l'une des revendications 1 à 11, dans laquelle le siège extérieur (12) comporte une zone (Z2) d'épaisseur E5 telle que :

$$E5 \geq E/3 + 0,5 \text{ mm}$$

**13.** Jante (30) de roue selon la revendication 12, dans laquelle l'épaisseur E5 est telle que :

$$E5 \leq E/3 + 0,9 \text{ mm}$$

**14.** Jante (30) de roue selon l'une des revendications 12 et 13, dans laquelle la zone (Z2) du siège extérieur (12) d'épaisseur E5 s'étend sensiblement sur l'ensemble du siège extérieur.

**15.** Jante (30) de roue selon la revendication 14, dans laquelle la zone (Z2) d'épaisseur E5 s'étend jusqu'à la zone du crochet extérieur (12) d'orientation perpendiculaire à l'axe de rotation de la roue.

**16.** Jante (30, 50) de roue selon l'une des revendications précédentes, dans laquelle l'épaisseur E au niveau de la

gorge de montage (9) est comprise entre 1,9 et 2,75 mm.

**17.** Jante (30, 50) de roue selon l'une des revendications précédentes dans laquelle les variations d'épaisseur sont obtenues par des opérations de fluotournage.

**Claims**

**1.** A motor vehicle sheet-steel wheel rim (30, 50) including axially, from the inner side to the outer side, an inner hook (4), an inner seat (5), a connecting zone (7), a mounting groove (9), a hump (11), an outer seat (5), and an outer hook (13), said rim being intended to be joined to a wheel disc (2) under the mounting groove (9), **characterized in that,** said rim having a given thickness E at said mounting groove (9), the connecting zone (7) includes a zone (Z5, Z'4) of thickness E1 such that :

$$E/3 + 0,5 \text{ mm} \geq E1 \geq E/3 \text{ mm} ;$$

and

$$E1 \geq 0,7 \text{ mm}.$$

**2.** A wheel rim (30, 50) according to claim 1, in which the whole of the connection zone (7) has said thickness E1.

**3.** A wheel rim (30, 50) according to any of claims 1 and 2, in which the outer hump (11) includes a zone (Z3, Z'2) of thickness E2 satisfies the following relationships :

$$E2 \geq E - 0,6 \text{ mm} ;$$

and

$$E2 \geq 1,4 \text{ mm}$$

**4.** A wheel rim (30, 50) according to claim 3, in which the zone (Z3, Z'2) of thickness E2 extends substantially over the whole of the outer hump (11).

**5.** A wheel rim (30) according to any one of claims 1 to 4, in which the inner seat (51) includes a zone (Z6) thickness E3 which satisfies the following relationships :

$$E3 \geq E/3 + 0,45 \text{ mm} ;$$

and

$$E3 \geq 1,2 \text{ mm}$$

**6.** A wheel rim (30) according to claim 5, in which :

$$E3 \leq E/3 + 0{,}9 \text{ mm.}$$

**7.** A wheel rim (30) according to claim 5 or 6, in which the whole of the inner seat (5) has said thickness E3.

**8.** A wheel rim (30) according to claim 7, in which, with the rim including an axially inner hump (6), the zone (Z6) of thickness E3 comprises the whole of said axially inner hump.

**9.** A wheel rim (30) according to any one of claims 1 to 8, in which the inner hook (4) includes a zone (27) of thickness E4 which satisfies the following relationship :

$$E4 \geq E/3 + 0{,}75 \text{ mm.}$$

**10.** A wheel rim (30) according to claim 9, in which :

$$E4 \leq E/3 + 1{,}2 \text{ mm.}$$

**11.** A wheel rim (30) according to claim 8 or 9, in which the zone (Z7) of the hook of thickness E4 includes a zone of the hook with an orientation perpendicular to the axis of rotation of the wheel.

**12.** A wheel rim (30) according to any one of claims 1 to 11, in which the outer seat (12) includes a zone (Z2) of thickness E5 such that :

$$E5 \geq E/3 + 0{,}5 \text{ mm.}$$

**13.** A wheel rim (30) according to claim 12, in which the thickness E5 is such that :

$$E5 \leq E/3 + 0{,}9 \text{ mm.}$$

**14.** A wheel rim (30) according to claim 12 or 13, in which the zone (Z2) of the outer seat (12) of thickness E5 extends substantially over the whole of the outer seat.

**15.** A wheel rim (30) according to claim 14, in which the zone (Z2) of thickness E5 extends as far as the zone of the outer hook (12) with an orientation perpendicular to the axis of rotation of the wheel.

**16.** A wheel rim (30, 50) according to any of preceeding claims 1, in which the thickness E at the mounting groove (9) is between 1.9 and 2.75 mm.

**17.** A wheel rim (30, 50) according to any preceeding claims 1, in which the variations in thickness are obtained by flow-turning operations.

**Patentansprüche**

**1.** Radfelge (30, 50) für ein Kraftfahrzeug, aus Stahlblech, umfassend in axialer Richtung von der inneren Seite zur äußeren Seite einen inneren Haken (4), einen inneren Sitz (5), eine Verbindungszone (7), eine Montagenut (9), einen Sicherheitshöcker (11), einen äußeren Sitz (5) und einen äußeren Haken (13), wobei die Felge dazu bestimmt ist, mit einer Radscheibe (2) unter der Montagenut (9) zusammengefügt zu werden, **dadurch gekennzeichnet, dass**, bei gegebener Dicke E der Felge auf Höhe der Montagenut (9), die Verbindungszone (7) eine Zone (Z5, Z'4) mit einer Dicke E1 aufweist, für die gilt:

$$E/3 + 0,5 \text{ mm} \geq E1 \geq E/3 \text{ mm};$$

und

$$E1 \geq 0,7 \text{ mm}.$$

2. Radfelge (30, 50) nach Anspruch 1, bei welcher die Gesamtheit der Verbindungszone (7) eine Dicke E1 besitzt.

3. Radfelge (30, 50) nach Anspruch 1 oder 2, bei welcher die Dicke E2 auf Höhe des äußeren Sicherheitshöckers (11) eine Zone (Z3, Z'2) aufweist, welche die folgenden Verhältnisse erfüllt:

$$E2 \geq E - 0,6 \text{ mm};$$

und

$$E2 \geq 1,4 \text{ mm}.$$

4. Radfelge (30, 50) nach Anspruch 3, bei welcher sich die Zone (Z3, Z'2) mit Dicke E2 im Wesentlichen über die Gesamtheit des äußeren Sicherheitshöckers (11) erstreckt.

5. Radfelge (30) nach einem der Ansprüche 1 bis 4, bei welcher die Dicke E3 auf Höhe des inneren Sitzes (5) eine Zone (Z6) aufweist, welche die folgenden Verhältnisse erfüllt:

$$E3 \geq E/3 + 0,45 \text{ mm};$$

und

$$E3 \geq 1,2 \text{ mm}.$$

6. Radfelge (30) nach Anspruch 5, bei welcher gilt:

$$E3 \leq E/3 + 0,9 \text{ mm}.$$

7. Radfelge (30) nach Anspruch 5 oder 6, bei welcher die Gesamtheit des inneren Sitzes (5) eine Dicke E3 besitzt.

8. Radfelge (30) nach Anspruch 7, bei welcher, bei der einen inneren Sicherheitshöcker (6) aufweisenden Felge, die Zone (Z6) mit Dicke E3 die Gesamtheit dieses Höckers umfasst.

9. Radfelge (30) nach einem der Ansprüche 1 bis 8, bei welcher die Dicke auf Höhe des inneren Hakens (4) eine Zone (Z7) aufweist, deren Dicke E4 das folgende Verhältnis erfüllt:

$$E4 \geq E/3 + 0,75 \text{ mm}$$

**10.** Radfelge (30) nach Anspruch 9, bei welcher gilt:

$$E4 \leq E/3 + 1{,}2 \text{ mm}$$

**11.** Radfelge (30) nach Anspruch 8 oder 9, bei welcher die Zone (Z7) des Hakens mit Dicke E4 die Zone des Hakens mit zur Rotationsachse des Rads senkrechter Ausrichtung aufweist.

**12.** Radfelge (30) nach einem der Ansprüche 1 bis 11, bei welcher der äußere Sitz (12) eine Zone (Z2) mit Dicke E5 aufweist, für die gilt:

$$E5 \geq E/3 + 0{,}5 \text{ mm}$$

**13.** Radfelge (30) nach Anspruch 12, bei welcher für die Dicke E5 gilt:

$$E5 \leq E/3 + 0{,}9 \text{ mm}$$

**14.** Radfelge (30) nach Anspruch 12 oder 13, bei welcher sich die Zone (Z2) des äußeren Sitzes (12) mit Dicke E5 im Wesentlichen über die Gesamtheit des äußeren Sitzes erstreckt.

**15.** Radfelge (30) nach Anspruch 14, bei welcher sich die Zone (Z2) mit Dicke E5 bis zur Zone des äußeren Hakens (12) mit zur Rotationsachse des Rads senkrechter Ausrichtung erstreckt.

**16.** Radfelge (30, 50) nach einem der vorangehenden Ansprüche, bei welcher die Dicke E auf Höhe der Montagenut (9) zwischen 1,9 und 2,75 mm liegt.

**17.** Radfelge (30, 50) nach einem der vorangehenden Ansprüche, bei welcher die Dickevariationen durch Drückwalzvorgänge erzielt werden.

**Fig. 1**

**Fig. 7**

**Fig. 6**

Flan de Tôle Métallique

```
┌─────────────────────────────┐
│      Cintrage Virole        │
└─────────────────────────────┘
```

```
┌─────────────────────────────┐
│      Soudage Virole         │
└─────────────────────────────┘
```

```
┌─────────────────────────────┐
│      Calibrage Virole       │
└─────────────────────────────┘
```

```
┌─────────────────────────────┐
│     Fluotournage Virole     │
└─────────────────────────────┘
```

```
┌ ─ ─ ─ ─ ─ ─ ─ ─ ─ ─ ─ ─ ─ ─ ┐
      Découpe bord Virole
└ ─ ─ ─ ─ ─ ─ ─ ─ ─ ─ ─ ─ ─ ─ ┘
```

```
┌─────────────────────────────┐
│      Evasement Virole       │
└─────────────────────────────┘
```

```
┌─────────────────────────────┐
│      Roulage Virole         │
└─────────────────────────────┘
```

```
┌─────────────────────────────┐
│      Calibrage Jante        │
└─────────────────────────────┘
```

```
┌─────────────────────────────┐
│   Assemblage disque/jante   │
└─────────────────────────────┘
```

**Fig. 2**

13

**Fig. 3**

**Fig. 4**

**Fig. 5**

Z'1   T'1

Z'2

Z'3

Z'5   Z'6

Z'4

13   12   11   10   9   8   **Fig. 9**   7   T'3   T'4   6   T'5   5   4   50

T'2

Z'1   Z'2   Z'3   Z'6

Z'5

Z'4

E   E2   E   E1   E3   E

T'1   T'2   T'3   T'4   T'5

**Fig. 8**

40

**EP 1 355 791 B1**

## RÉFÉRENCES CITÉES DANS LA DESCRIPTION

**Documents brevets cités dans la description**

- US 5579578 A